# EUROPÄISCHE PATENTSCHRIFT

(11) **EP 2 112 123 B1**
(45) Veröffentlichungstag und Bekanntmachung des Hinweises auf die Patenterteilung: **29.08.2012**
(21) Anmeldenummer: 09004860.4
(22) Anmeldetag: 02.04.2009
(51) Int. Cl.: C01B 25/40, C09K 21/04, D06M 11/72

(54) **Verfahren zur Herstellung von Flammschutzmitteln und ihre Verwendung in Textilien**
Method for manufacturing flame retardants and their application in textiles
Procédé de fabrication de moyens ignifuges et leur utilisation dans des textiles

(30) Priorität: 25.04.2008 DE 102008021027
(43) Veröffentlichungstag der Anmeldung: 28.10.2009
(73) Patentinhaber: BK Giulini GmbH, 67065 Ludwigshafen (DE)
(72) Erfinder: Staffel, Thomas, 67269 Grünstadt (DE); Thauern, Henrike, 68165 Mannheim (DE); Schmitt, Michael, 69124 Heidelberg (DE)

(56) Entgegenhaltungen:
- GB-A- 1 504 507
- GB-A- 2 202 243
- US-A- 3 044 851
- US-A- 3 537 814
- US-A- 3 653 821

## Beschreibung

Diese Erfindung betrifft Textilmaterialien, die eine verbesserte Nichtentflammbarkeit aufweisen. Insbesondere betrifft diese Erfindung eine Stickstoff und Phosphor enthaltende in Wasser gelöste Verbindung die für diesen Anwendungszweck besonders gut geeignet ist und die nach einem speziellen Verfahren hergestellt wird.

Brennende Textilien sind ein häufiges Phänomen, so z. B. in Wohnungen, in denen Teppiche Möbel oder Heimtextilien sich befinden. Aber auch Kleidung, besonders von Feuerwehrleuten, Kindern oder auch Küchenpersonal wird sehr häufig der Gefahr des Feuers ausgesetzt. In vielen industriellen Verfahren spielen Textilien eine große Rolle, die feuerfest ausgerüstet sein müssen.

Bei der Bekämpfung eines bereits in Brand geratenen Textilmaterials gibt es einige Möglichkeiten, um den weiteren Brand zu verhindern, man kann einfach mit Wasser oder mit Sand oder auch einer Decke oder mit sog. Pulverlöschern, in denen sich häufig Natriumhydrogencarbonat unter Kohlendioxiddruck befindet, löschen. Der Mechanismus des Löschens besteht hier in der Erstickung der Flamme durch freiwerdendes Kohlendioxid, das durch den thermischen Zerfall des Natriumhydrogencarbonates gebildet wird. Die Flammschutzwirkung durch phosphorhaltige Flammschutzmittel wird hauptsächlich durch Stickstoff- und Wasserabspaltung in der kondensierten Phase erzeugt. Dabei wirkt der Stickstoff durch das fernhalten von Sauerstoff flammhemmend, während das Wasser die Umgebung kühlt. Intumeszenzfarben, die pulverförmiges Ammoniumpolyphosphat enthalten, wirken hauptsächlich durch das Ausbilden eines gegen Hitze isolierenden Schaums.

Bei der Bekämpfung von sog. Wildfire oder Waldbrand, müssen von Flugzeugen aus ammoniumphosphathaltige wässerige Slurries oder Suspensionen versprüht werden. Ammoniumpolyphosphate sind in der Regel nicht wasserlöslich und müssen deshalb mit Suspendierungsmitteln suspendiert werden.
In der US 6, 846, 437 /Vandersall/ wird eine solche Lösung beschrieben. Die hier zum Einsatz kommende Ammoniumpolyphosphatlösung stammt aus der Düngemittelproduktion beim Aufschluß des Rohphosphates mit Säure. Dabei wird eine ortho-Phosphorsäurelösung mit 68 bis 74 Gew.-% P2O5 erhalten. Diese saure Lösung wird mit gasförmigem Ammoniak bei höheren Temperaturen und Drucken neutralisiert. Dabei enthält die so entstehende Verbindung ortho-, pyro-, tripoly-, tetrapoly., und einige höherkettige und zyklische Phosphatspezies. Mit der Zeit und bei entsprechenden Temperaturen de-polymerisieren die höherkondensierten Spezies. Kommerziell verfügbare Lösungen enthalten 34 bis 37 Gew. % P₂O₅ Lösungen mit höheren P₂O₅ Konzentrationen sind nicht stabil. Diese Lösungen tragen in der Düngemittelindustrie häufig Bezeichnungen, wie 10-34-0 oder 11-37-0, in diesen Zahlen spiegeln sich die Gehalte von Stickstoff, P₂O₅ und K₂O wieder. Auch unter normalen Unständen können diese Lösungen wieder de-polymerisieren, vor allem bei höheren Temperaturen und längeren Standzeiten und werden dabei wieder wasserunlöslicher, so daß die Gehalte dieser Lösung durchaus variabel sind. In der Tabelle 1 sind die charakteristischen Zusammensetzungen solcher Lösungen enthalten. Man sieht deutlich, daß der Hauptanteil die sog. P1 bis P3 Fraktion mehr als 80 % absolut beträgt, was einem P₂O₅ Gehalt von ca. 34 Gew. % entspricht. Der Gehalt an der P4 bis P50 Fraktion ist dagegen fast Null.
Außerdem enthalten diese Lösungen sehr häufig Verunreinigungen, wie Diammoniumsulfat oder Alkalimetalle in Abhängigkeit vom eingesetzten Rohphosphat. Ein sehr wesentlicher Nachteil jedoch besteht in der starken Korrosivität einer solchen Lösung, die nur durch verschiedene Zusätze herabgesetzt werden kann. Nur mit Hilfe dieser Zusätze kann eine solche Lösung ihrer eigentlichen Bestimmung als Feuerlöschsuspension bei der Waldbrandbekämpfung zugeführt werden.

Diese Ammoniumpolyphosphatlösungen sind nicht geeignet, Textilien damit zu behandeln und feuerfest auszurüsten, denn sie können die Textilfasern schädigen aufgrund ihres saueren Charakters, sie haben pH Werte um 6, und machen dadurch die damit behandelten Textilien steif und schwer und bedingen damit ihre schlechten Trageeigenschaften und Verarbeitbarkeit.

Es wurden bereits verschiedene Verbindungen und Zubereitungen zur Behandlung von Textilien bzw. Textilfasern verwendet, um diese nichtentflammbar zu machen.

Viele dieser Verbindungen enthalten Brom, aber es gibt auch Stickstoff und Phosphor enthaltende Verbindungen. Beispielhaft sind an dieser Stelle Decabromdiphenylether, Hexabromcyclododecan, aber auch halogenfreie oligomere oder polymere Phosphonatverbindungen oder Carboxyphosphinsäure oder Aminphosphonatester genannt.
In der US 5,750,603 /Asrar/ wird eine solche monomere Carboxyphosphinsäure, das sog. "CEPPA", eine 2-carboxyethyl(phenyl)-Phosphinsäure als halogenfreier Zusatz zur Feuerfestausrüstung von Polyamidfasern beschrieben.
In der US 4,404,313 werden flammhemmende und schwelbrandverhindernde Verbindungen für Teppiche und Teppichbodenrücken beschrieben. Diese Verbindungen bestehen aus Aminophosphonat-Ester, hier bevorzugt das Diethyl N,N-bis (2-hydroxyethyl) aminoethylphosphonate, unter dem Markennamen "Fyrol.RTM6 der Firma Stauffer Chemical Company bekannt.

In der JP 200463131 wird eine Zusammensetzung, enthaltend eine wässerige Ammoniumphosphatlösung, die neben Orthophosphaten auch Polysalze enthält, Phosphorsäureester und eine wässerige Harzemulsion, beschrieben. Diese Zusammensetzung wird als Beschichtungsmittel für Teppiche und Vorhänge eingesetzt.

Die oben beschriebenen Verbindungen haben jedoch für die Feuerfestausrüstung durch Imprägnierung in der wäßrigen Phase von Textilien Nachteile. Ein sehr wesentlicher Nachteil ist ihre schlechte Wasserlöslichkeit. Diese schlechte Wasserlöslichkeit ist durch das Vorhandensein von niedrigkettigen P1 bis P3 Fraktionen bedingt.

**Tabelle 1**

| Art | Ammoniumpolyphosphatlösung 10-34-00 | Ammoniumpolyphosphatlösung 11-37-00 |
|---|---|---|
| | % | % |
| P1 | 40,6 | 39,2 |
| P2 | 39,7 | 43,3 |
| P3 | 13,2 | 10,7 |
| P4-P10 | 0,7 | 1,6 |
| P11-P50 | 0,4 | 5,1 |
| > P50 | 5,3 | 0,1 |
| cycl. P | 0 | 0 |
| Summe | 100 | 100 |

In der Patentanschrift US3653821 wird ein Verfahren zur Herstellung von Ammoniumpolyphosphatlösungen offenbart, in dem die Länge der Polyphosphatkette durch die Reaktionstemperatur kontrolliert werden kann. Mit diesem Verfahren werden Ammoniumpolyphosphate hergestellt, die Ketten zwischen P = 10 und P = 400 aufweisen.

In der Patentbeschreibung US3537814 wird ein Prozess zur Herstellung von Ammoniumpolyphosphat-lösungen offenbart, in dem H₃PO₄ in einer sehr hohen P₂O₅ Konzentration (83.1 %) eingesetzt wird.

Es stellte sich daher die Aufgabe, wasserlösliche Ammoniumpolyphosphatlösungen zu finden und diese auch gezielt herzustellen, denn nur diese löslichen Verbindungen wären zur Imprägnierung von Textilien geeignet, vor allem hätten sie die erforderliche höhere P₂O₅ Konzentration.

Überraschend wurde gefunden dass durch bei niedrigen Temperaturen und durch Neutralisation von Polyphosphorsäurelösungen mit Ammoniak, Ammoniumpolyphosphatlösungen gebildet werden, die bei einem Kondensationsgrad von 4 bis 50 überwiegend gut wasserlöslich sind. Diese Ammoniumpolyphosphatlösungen bilden auch in hohen Konzentrationen stabile, echte wässerige Lösungen und sind
für die wirksame Imprägnierung von Textilien gut geeignet. Erfindungswesentlich ist der hohe Anteil an Phosphatfraktionen von P4 bis P50, d.h. solche die einen höheren Kondensationsgrad aufweisen, Die Konzentrationen aller anderen Fraktionen sind niedriger, d.h. nicht größer als maximal 40 Gew. %. , vorzugsweise unter 20 Gew.-%

**Tabelle 2 Zusammensetzung der erfindungsgemäßen Ammoniumpolyphosphatlösung**

| Art | Ammoniumpolyphosphatlösung % | Polyphosphorsäure % |
|---|---|---|
| P1 | 3,6 | 2,7 |
| P2 | 7,6 | 6,4 |
| P3 | 9,6 | 8,2 |
| P4-P10 | 50,9 | 55,0 |
| P11-P50 | 28,3 | 27,6 |
| > P50 | 0 | 0 |
| cycl. P | 0 | 0 |
| Summe | 100,0 | 100 |

Die Verwendung dieser Lösungen in der Flammfestausrüstung von Textilien bringt überraschend gute Resultate, sowohl bei natürlichen, als auch bei polymeren Fasern. Das damit behandelte Textilmaterial weist vor allem einen fast unveränderten weichen Griff auf. Dies bedingt auch gute Trageeigenschaften der damit hergestellten Kleidungsstücke bzw. gute Verarbeitbarkeit der Textilien z.B. in der Herstellung von Auto- oder Möbelbezügen.

Die Erfindung bezieht sich auf die Verwendung von Textilien wie: Gewebe, Gewirke, Maschenware, Gelege und Vliesstoffe auf Basis von Naturfasern wie: Pflanzliche Fasern, Cellulosefasern, Pflanzeneiweißfasern, Papierfasern, Gummifasern und Alginatfasern, sowie Tierische Fasern wie Wolle und Haare und auf Basis von Chemiefasern wie: Polymerisationsfasern, Polykondensationsfasern und Polyadditionsfasern.
Der erfinderische Verfahren und Verwendung sind durch die folgenden Ansprüche näher definiert.
Das Verfahren zur Herstellung von wässerigen Ammoniumpolyphosphatlösungen besteht darin, dass man eine hochkonzentrierte Polyphosphorsäure der Zusammensetzung (HPO3)ₙ mit n=1 bis 50 und mit P1 bis P3 Anteilen bis zu 20 Gew.-% und mit P4 bis P50 Anteilen von 70 bis zu 90 Gew.-% entweder mit einer wässerigen 10 bis 30 Gew.-%ige Ammoniaklösung oder mit Ammoniakgas bis maximal 60 °C bis zur Erreichung des pH-Wert Bereiches von 6,5 bis 7,5 vermischt, die so erhaltene Lösung auf Raumtemperatur abkühlt, so daß eine klare Ammoniumpolyphosphatlösung der Formel (NH₄PO₃)ₙ mit n= 1 bis 50 mit einem Feststoffgehalt bis 50 Gew. % mit einem pH- Wert von 6,5 bis 7,5 resultiert. Vorzugsweise hat eine solche Lösung eine Dichte von 1,1 bis 1,3 g/ml.
Die eingesetzte Polyphosphorsäure weist die gemäß Tabelle 2 aufgeführte Phosphationen Verteilung auf.
Die so hergestellte Ammoniumpolyphosphatlösung wird erfindungsgemäß zur Feuerfestausrüstung von Textilien verwendet, wobei die Ammoniumpolyphosphatlösung ca. als 5 bis 15 %ige wässerige Lösung auf die Textilien durch Tränken, Besprühen, Tauchen, Imprägnieren und Rakeln in einer Menge von 10 bis 500 g/m2 auf das Textilgewebe aufgebracht wird.

### I. Verfahren zur Herstellung der erfinderischen Ammoniumpolyphosphatlösung:

Zu etwa 1 bis 1,5 Liter deionisiertem Wasser fügt man langsam 2,75 kg Polyphosphorsäure der Zusammensetzung gemäß Tabelle 2 , sowie 5,93 kg 25 %iges Ammoniakwasser zeitgleich zu, wobei die Temperatur während der Zugabe nicht über 60°C steigen darf und der pH-Wert zwischen 6,5 und 7,5 gehalten wird. Man erhält so eine wässerige Ammoniumpolyphosphatlösung mit der Phosphationenverteilung gemäß Tabelle 2.

In den folgenden Tabellen 3 und 4 sind die Ergebnisse der Laborbrennversuche demonstriert.

### Versuch 1

Es wurden gleich große Streifen aus Baumwollgewebe mit den unterschiedlichen Lösungen getränkt und danach getrocknet. Die trockenen Streifen wurde einer starken Gasflamme mit einer Temperatur von über 500 °C ausgesetzt und ca. 1 Minuten in der Gasbrennerflamme bei ca. 450 bis 600 °C gehalten.

**Tabelle 3: Baumwollgewebe mit 10 % -igen Phosphatlösungen imprägniert Größe 2 cm x 20 cm, Gewicht ca 180 g/m²**

| Phosphat | pH-Wert | P₂O₅-Gehalt | Brennverhalten | Zerstörungsgrad des Gewebes |
|---|---|---|---|---|
| | *) | | | |
| Ammoniumpolyphosphat (NH₄PO₃)ₙ mit Anteil an n= 4 bis 50 ca. 80 Gew.-% | 7 | 85 | Keine Entflammung# | sehr gering |
| Monoammoniumphosphat NH₄H₂PO₄ | 4 | 60 | Keine Entflammung# | Stark |
| Diammoniumphosphat (NH₄)₂HPO₄ | 8 | 55 | Keine Entflammung # | Stark |
| Natriumtrimetaphosphat (NaPO₃)₃ | 7 | 70 | Keine Entflammung # | Stark |
| Natriumpolyphosphat 1 (NaPO₃)ₙ | 7 | 68 | Keine Entflammung # | Stark |
| Natriumpolyphosphat 2 (NaPO₃)ₙ | 4 | 70 | Keine Entflammung # | Stark |
| Monokaliumphosphat KH₂PO₄ | 5 | 52 | Keine Entflammung # | sehr stark |
| Kaliumtripolyphosphat K₅P₃O₁₀ | 10 | 48 | Keine Entflammung # | vollständig zerstört |

| | | | | |
|---|---|---|---|---|
| *) gemessen in einer 1 % igen Lösung # nach 15 Minuten abgebrochen | | | | |

### Versuch 2

**Tabelle 4: Polyethylen-Gewirke mit 10 % -igen Phosphatlösungen imprägniert ,Größe 3 cm x 20 cm, Gewicht ca. 360 g/m²**

| Phosphat | pH-Wert | P₂O₅-Gehalt | Brennverhalten | Zerstörungsgrad des Gewirkes |
|---|---|---|---|---|
| | *) | | | |
| Ammoniumpolyphosphat (NH₄PO₃)ₙ mit Anteil an n= 4 bis 50 ca. 80 Gew.-% | 7 | 85 | keine Entflammung | geringe Erweichung an der beflammten Stelle |
| Natriumpolyphosphat 1 (NaPO₃)ₙ | 7 | 68 | keine Entflammung | erweicht an der beflammten Stelle |
| Natriumpolyphosphat 1 (NaPO₃)ₙ | 4 | 70 | keine Entflammung | erweicht an der beflammten Stelle |
| Monoammoniumphosphat NH₄H₂PO₄ | 4 | 60 | keine Entflammung | erweicht an der beflammten Stelle |
| Diammoniumphosphat (NH₄)₂HPO₄ | 8 | 55 | keine Entflammung | erweicht an der beflammten Stelle |
| Natriumtrimetaphosphat (NaPO₃)₃hat | 7 | 70 | Entflammung nach ca. 5 - 10 sec. | brennt außerhalb der Flamme weiter |
| Monokaliumphosphat KH₂PO₄ | 5 | 52 | Entflammung nach ca. 5 - 10 sec. | brennt außerhalb der Flamme weiter |
| Kaliumtripolyphosphat K₅P₃O₁₀ | 10 | 48 | Entflammung nach ca. 5 - 10 sec. | brennt außerhalb der Flamme weiter |

| | | | | |
|---|---|---|---|---|
| *) gemessen in einer 1 % igen Lösung | | | | |

### Verhärtung des Textils durch die Imprägnierung

Die Steifigkeit wird anhand der Eigenstabilität in Form der Biegesteifigkeit beurteilt. Dabei wird der Winkel gemessen, mit dem das Textil aus der Horizontalen abgelenkt wird.
Ein großer Winkel bedeutet demnach eine sehr geringe Steifigkeit, ein sehr kleiner Winkel eine hohe Steifigkeit.

**Tabelle 5:**

| Phosphat | pH-Wert | P₂O₅-Gehalt | Biegesteifigkeit, Ablenkung gegen die Horizontale |
|---|---|---|---|
| | *) | | |
| Ammoniumpolyphosphatlösung erfindungsgemäß | 7 | 85 | 85° |
| Kaliumtripolyphosphat | 10 | 48 | 80 ° |
| Monoammoniumphosphat | 4 | 60 | 45 ° |
| Natriumtrimetaphosphat | 7 | 70 | 45 ° |
| Monokaliumphosphat | 5 | 52 | 38 ° |
| Natriumpolyphosphat 1 | 4 | 70 | 37 ° |
| Natriumpolyphosphat 2 | 7 | 68 | 35 ° |
| Diammoniumphosphat | 8 | 55 | 28 ° |

| | | | |
|---|---|---|---|
| *) gemessen in einer 1 % igen Lösung | | | |

### Zusammenfassung der Ergebnisse

**Tabelle 6**

| Phosphat | pH-Wert | P2O5-Gehalt | Flammschutz | Versteifungsgrad des Textils |
|---|---|---|---|---|
| | *) | | | |
| Ammoniumpolyphosphatlösu ng erfindungsgemäß | 7 | 85 | optimale Wirkung | sehr geringe Veränderung |
| Monoammoniumphosphat | 4 | 60 | ausreichende Wirkung | erkennbare Versteifung |
| Natriumpolyphosphat 1 | 7 | 68 | ausreichende Wirkung | starke Versteifung |
| Natriumpolyphosphat 2 | 4 | 70 | ausreichende Wirkung | starke Versteifung |
| Diammoniumphosphat | 8 | 55 | ungenügende Wirkung | sehr starke Versteifung |
| Kaliumtripolyphosphat | 10 | 48 | ungenügende Wirkung | sehr geringe Veränderung |
| Natriumtrimetaphosphat | 7 | 70 | ungenügende Wirkung | erkennbare Versteifung |
| Monokaliumphosphat | 5 | 52 | ungenügende Wirkung | starke Versteifung |

| | | | | |
|---|---|---|---|---|
| *) gemessen in einer 1 % igen Lösung | | | | |

## Patentansprüche

1. Verfahren zur Herstellung von wässerigen Ammoniumpolyphosphatlösungen, **dadurch gekennzeichnet, daß** man eine Polyphosphorsäure der Zusammensetzung (H₃PO₃)ₙ mit n= 1 bis 50 und einer Phosphationenverteilung von P1 bis P3 bis 20 Gew.-% und P4 bis P50 von 70 bis 90 Gew.-% mit einer wässerigen 10 bis 30 Gew.-% Ammoniaklösung und/oder mit Ammoniakgas bis maximal 60 °C und bis zur Erreichung des pH-Wert Bereiches von 6,5, bis 7,5 vermischt, die so erhaltene Lösung auf Raumtemperatur abkühlt, so daß eine klare. Ammoniumpolyphosphatlösung der Formel (NH₄PO₃)n mit n=1 bis 50 und mit einem Feststoffgehalt bis 50 Gew.- % mit einem pH- Wert von 6,5 bis 7,5 und einer Dichte von 1,1 bis 1,3 g/ml und einem P4 bis P50 Anteil von 60 bis 90 Gew.-% resultiert.

2. Verfahren zur Herstellung von wässerigen Ammoniumpolyphosphatlösungen nach Anspruch 1, **dadurch gekennzeichnet, daß** der P4 bis P50 Anteil bevorzugt 70 bis 80 Gew.-% beträgt.

3. Verwendung der nach den Ansprüchen 1 und 2 hergestellten Ammoniumpolyphosphatlösung zur Feuerfestausrüstung von Textilien, **dadurch gekennzeichnet, daß** die Ammoniumpolyphosphatlösung als 10 Gew.-%ige wässerige Lösung auf die Textilien durch Tränken, Besprühen, Tauchen, Imprägnieren und Rakeln in einer Menge von 10 bis 500 g /m² auf das Textilgewebe aufgebracht wird.

4. Verwendung der nach den Ansprüchen 1 und 2 hergestellten Ammoniumpolyphosphatlösung zur Feuerfestausrüstung von Textilien, **dadurch gekennzeichnet, daß** die Menge an Ammoniumpolyphosphat im Textilmaterial 30 - 200 g/m² beträgt.

5. Verwendung der nach den Ansprüchen 1 und 2 hergestellten Ammoniumpolyphosphatlösung zur Feuerfestausrüstung von Textilien, **dadurch gekennzeichnet, daß** die Menge an Ammoniumpolyphosphat im Textilmaterial bevorzugt 40 - 70 g/m² beträgt.

6. Ammoniumpolyphosphatlösung herstellbar nach einem der Ansprüche 1 bis 2.

## Claims

1. A process for producing aqueous ammonium polyphosphate solutions, **characterised in that** a polyphosphoric acid of the composition (H₃PO₃)ₙ with n= 1-50 and a phosphate ion distribution of P1-P3 to 20 weight-% and P4-P50 from 70 to 90 weight-% is mixed with an aqueous 10-30 weight-% ammonia solution and/or with gaseous ammonia to a maximum of 60 °C and until reaching the pH value range of 6.5-7.5, the solution thus obtained cools off to room temperature so that a clear ammonium polyphosphate solution results with the formula (NH₄PO₃)n with n=1-50 and with a solids concentration of as much as 50 weight-% with a pH value of 6.5-7.5 and a density of 1.1-1.3 g/ml and a P4-P50 share of 60-90 weight-%.

2. A process for producing aqueous ammonium polyphosphate solutions according to claim 1, **characterised in that** the P4-P50 share is preferably 70-80 weight-%.

3. Utilisation of the ammonium polyphosphate solution produced in accordance with claims 1 and 2 for textile fireproofing, **characterised in that** the ammonium polyphosphate solution is applied to the textiles as 10 weight-% aqueous solution by saturating, spraying, immersing, impregnating and doctoring at a quantity of 10-500 g /m² onto the textile fabric.

4. Utilisation of the ammonium polyphosphate solution produced according to claims 1 and 2 for textile fireproofing, **characterised in that** the quantity of ammonium polyphosphate in the textile material is 30-200 g/m².

5. Utilisation of the ammonium polyphosphate solution produced according to claims 1 and 2 for textile fireproofing, **characterised in that** the quantity of ammonium polyphosphate in the textile material is preferably 40-70 g/m².

6. Ammonium polyphosphate solution producible according to one of claims 1-2.

## Revendications

1. Procédé de fabrication de solutions aqueuses de polyphosphate d'ammonium **caractérisé en ce que** l'on mélange un acide polyphosphorique de composition **(H₃PO₃)ₙ** avec n= 1 à 50 et une distribution d'ions phosphates constituée jusqu'à 20 % de P1 à P3 et de 70 à 90 % de P4 à P50 avec 10 à 30 % d'une solution aqueuse d'ammoniaque et/ou de gaz ammoniac à maximum 60 °C et jusqu'à une marge de pH de 6,5 à 7,5, **en ce que** la solution ainsi obtenue refroidit à température ambiante de sorte qu'il résulte une solution transparente de phosphate d'ammonium de formule (NH₄PO₃)n avec n=1 à 50 et avec une teneur en substance solide de jusqu'à 50 %, un pH entre 6,5 et 7,5, une densité de 1,1 à 1,3 g/ml et une proportion de P4 à P50 de 60 à 90 %.

2. Procédé de fabrication de solutions aqueuses de polyphosphate d'ammonium selon la revendication 1, **caractérisé en ce que** la proportion de P4 à P50 est de préférence de 70 à 80 % de la masse.

3. Utilisation de la solution de polyphosphate d'ammonium réalisée selon les revendications 1 et 2 pour ignifuger des textiles, **caractérisée en ce que** la solution de polyphosphate d'ammonium est appliquée sur les textiles comme 10 % de solution aqueuse par immersion, vaporisation, trempage, imprégnation et raclage, à raison de 10 à 500 g /m² sur le tissu textile.

4. Utilisation de la solution de polyphosphate d'ammonium réalisée selon les revendications 1 et 2 pour ignifuger des textiles, **caractérisée en ce que** la quantité de polyphosphate d'ammonium dans la matière textile s'élève à 30 - 200 **g/m².**

5. Utilisation de la solution de polyphosphate d'ammonium réalisée selon les revendications 1 et 2 pour ignifuger des textiles, **caractérisée en ce que** la quantité de polyphosphate d'ammonium dans la matière textile s'élève de préférence à 40 - 70 g/m².

6. Solution de polyphosphate d'ammonium réalisable selon l'une des revendications 1 à 2.
